(19)

**Europäisches Patentamt**

**European Patent Office**

**Office européen des brevets**

(11)     **EP 2 236 189 B1**

(12)              **EUROPEAN PATENT SPECIFICATION**

(45) Date of publication and mention
of the grant of the patent:
**20.06.2012   Bulletin 2012/25**

(51) Int Cl.:
***B01D 46/24*** *(2006.01)*

(21) Application number: **10250481.8**

(22) Date of filing: **15.03.2010**

(54) **Honeycomb structure**

Wabenstruktur

Structure en nid d'abeille

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority:  **24.03.2009   JP 2009072363**

(43) Date of publication of application:
**06.10.2010   Bulletin 2010/40**

(73) Proprietor: **NGK Insulators, Ltd.
Nagoya-city, Aichi 467-8530 (JP)**

(72) Inventors:
 • **Saito, Chika
   Nagoya-city, Aichi-ken 467-8530 (JP)**
 • **Hirose, Syogo
   Nagoya-city, Aichi-ken 467-8530 (JP)**

 • **Kuki, Tatsuyuki
   Nagoya-city, Aichi-ken 467-8530 (JP)**
 • **Miyairi, Yukio
   Nagoya-city, Aichi-ken 467-8530 (JP)**
 • **Harada, Masashi
   Nagoya-city, Aichi-ken 467-8530 (JP)**
 • **Noguchi, Yasushi
   Nagoya-city, Aichi-ken 467-8530 (JP)**

(74) Representative: **Paget, Hugh Charles Edward et al
Mewburn Ellis LLP
33 Gutter Lane
London
EC2V 8AS (GB)**

(56) References cited:
**EP-A1- 1 707 251        FR-A1- 2 893 861
US-A1- 2008 110 143**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

The present invention relates to a honeycomb structure. More particularly, the present invention relates to a honeycomb structure used as a material (carrier) for a honeycomb catalyst body that effectively purifies toxic substances (e.g., carbon monoxide (CO), hydrocarbons (HC), nitrogen oxides (NOx), sulfur oxides (SOx), and particulate matter (PM)) contained in exhaust gas discharged from an automobile engine, a construction machine engine, a stationary industrial engine, a combustion apparatus, and the like.

A catalyst body having a honeycomb structure (i.e., honeycomb catalyst body) has been used to purify exhaust gas discharged from an engine or the like. The honeycomb catalyst body has a structure in which a catalyst layer is supported on the surface of a partition wall that defines cells. When purifying exhaust gas using such a honeycomb catalyst body (honeycomb structure), exhaust gas that has entered the cells of the honeycomb catalyst body through one end face of the honeycomb catalyst body comes in contact with the catalyst layer formed on the surface of the partition wall, and is discharged to the outside of the honeycomb catalyst body through the other end face of the honeycomb catalyst body (refer to JP-A-2003-33664, for example).

In this case, it is necessary to improve the purification efficiency by allowing the purification target components (e.g., particulate matter) contained in exhaust gas to be transferred to the catalyst layer formed on the surface of the partition wall as efficiently as possible. The exhaust gas purification efficiency can be improve by reducing the hydraulic diameter of the cells and increasing the surface area of the partition wall.

For example, the number of cells (cell density) per unit area is increased. However, particulate matter contained in exhaust gas cannot be advantageously removed when using the above method. Therefore, the end faces of the honeycomb catalyst body may be alternately plugged so that exhaust gas passes through the partition wall (refer to JP-A-2001-269585, for example).

EP 1 707 251 describes a honeycomb structure for use as a filter. The structure is made of a porous material with a plurality of through holes. Plugs may be formed in the ends of some of the through holes.

Wall thickness between the through holes is preferably 0.15 to 0.40mm. Porosity of the filter is preferably 30 to 80%, with pores of average pore diameter 10 to 30$\mu$m. Cell density (number of through holes per unit cross-sectional area) is preferably 31 to 78pcs/cm$^2$. The aperture ratio (ratio of the total area of through holes to the cross-sectional area) is preferably 58 to 75%.

US 2008/110143 describes a porous honeycomb body with a number of through holes. Some of the through holes may be plugged at one end.

Wall thickness between the through holes is typically 0.07 to about 0.6mm. Pores have a median pore diameter greater than 10$\mu$m, preferably 10 to 30$\mu$m. A total porosity of the body is greater than 30%. The cell density is between 10.9 cells/cm$^2$ and 62 cells/cm$^2$. The aperture ratio is not mentioned.

SUMMARY OF THE INVENTION

The transfer rate of the purification target components from exhaust gas to the catalyst layer formed on the surface of the partition wall increases in inverse proportion to the square of the hydraulic diameter of the cells. Specifically, the transfer rate of the purification target components increases as the cell density increases. On the other hand, the pressure loss when exhaust gas passes through the cells tends to increase in inverse proportion to the square of the hydraulic diameter of the cells. Therefore, the pressure loss increases along with an increase in the transfer rate of the purification target components. An increase in pressure loss may be suppressed by reducing the thickness of the partition wall of the honeycomb structure. However, the strength of the partition wall decreases as a result of reducing the thickness of the partition wall.

The honeycomb catalyst body disclosed in JP-A-2003-33664 and the filter (honeycomb structure) disclosed in JP-A-2001-269585 are not satisfactory from the viewpoint of a reduction in thickness and an increase in strength of the partition wall. Therefore, development of a honeycomb structure that is used as a material for a honeycomb catalyst body, allows the partition wall to have a sufficient strength and a reduced thickness, shows a low pressure loss, and exhibits a high particulate matter collection efficiency and a high exhaust gas purification efficiency, has been desired.

The present invention was conceived in view of the above problems. An object of the present invention is to provide a honeycomb structure that allows the partition wall to have a sufficient strength and a reduced thickness, shows a low pressure loss, and exhibits a high particulate matter collection efficiency and a high exhaust gas purification efficiency.

According to the present invention, the following honeycomb structure is provided.

[1] A honeycomb structure comprising:

a porous partition wall that has a number of pores and is disposed to form a plurality of cells that extend between two end faces of the honeycomb structure; and

a plurality of plugging sections that are disposed to plug the plurality of cells on either of the end faces or inside the plurality of cells,

the partition wall having a thickness of 76.2 to 177.8 $\mu$m, an average pore size of 8 to 30 $\mu$m, and a porosity of 10 to 35%, and the honeycomb structure having a cell density of 12.4 to 45.0 cells/cm$^2$;

and wherein the ratio of the total open area of the plurality of cells to the sum of the cross-sectional area of the partition wall and the total open area of the plurality of cells in a cross section perpendicular to a cell extension direction is 83 to 90%.

[2] The honeycomb structure according to [1], wherein the partition wall has a permeability of $1\times10^{-12}$ to $6\times10^{-12}$ m$^2$.

[3] The honeycomb structure according to [1] or [2] wherein the hydraulic diameter (m) of the cells and the permeability (m$^2$) of the partition wall satisfy the relationship "(hydraulic diameter of cells)$^2$ / (permeability) = $1.0\times10^5$ to $4.5\times10^6$".

[4] The honeycomb structure according to any one of [1] to [3], the honeycomb structure being formed of a material that contains at least one ceramic selected from the group consisting of cordierite, aluminum titanate, silicon carbide, sialon, mullite, silicon nitride, zirconium phosphate, zirconia, titania, alumina, and silica.

[5] The honeycomb structure according to any one of [1] to [4] the honeycomb structure having has a thermal expansion coefficient of $1.0\times10^{-6}$/°C or less measured at 40 to 800°C in the cell extension direction.

The honeycomb structure according to the present invention allows the partition wall to have a sufficient strength and a reduced thickness, shows a low pressure loss, and exhibits a high particulate matter collection efficiency and a high exhaust gas purification efficiency.

BRIEF DESCRIPTION OF THE DRAWINGS

FIG 1 is a front view schematically showing a honeycomb structure according to one embodiment of the present invention.

FIG 2 is a cross-sectional view of the honeycomb structure shown in FIG. 1 along the cell extension direction.

FIG 3 is an enlarged cross-sectional view of part of the honeycomb structure shown in FIG 2.

FIG. 4 is an enlarged cross-sectional view schematically showing part of the partition wall of a honeycomb structure according to another embodiment of the present invention.

FIG 5 is a cross-sectional view schematically showing a honeycomb structure according to another embodiment of the present invention.

FIG 6 is an enlarged schematic view showing a honeycomb catalyst body obtained by causing a catalyst to be supported on the honeycomb structure shown in FIG 1.

FIG 7 is a schematic view illustrative of a specimen used to measure the permeability.

DESCRIPTION OF PREFERRED EMBODIMENTS

Embodiments of the present invention are described below. Note that the present invention is not limited to the following embodiments. Various modifications, improvements, and the like may be appropriately made of the following embodiments without departing from the scope of the present invention based on the knowledge of a person skilled in the art.

[1] Honeycomb structure

A honeycomb structure according to one embodiment of the present invention includes a porous partition wall that has a number of pores and is disposed to form a plurality of cells that extend between two end faces of the honeycomb structure, and a plurality of plugging sections that are disposed to plug the plurality of cells on either of the end faces or inside the plurality of cells. The partition wall has a thickness of 76.2 to 177.8 $\mu$m, an average pore size of 8 to 30 $\mu$m, and a porosity of 10 to 35%, and the honeycomb structure has a cell density of 12.4 to 45.0 cells/cm$^2$. The honeycomb structure having the above configuration allows the partition wall to have a sufficient strength and a reduced thickness, shows a low pressure loss, and exhibits a high particulate matter collection efficiency and a high exhaust gas purification efficiency.

The honeycomb structure according to the present invention may be used as a purification apparatus that removes particulate matter (PM) contained in exhaust gas discharged from a direct-injection gasoline engine, although the application of the honeycomb structure is not limited thereto. Specifically, since the amount of particulate matter contained in exhaust gas discharged from a direct-injection gasoline engine is small as compared with a diesel engine, the thickness of the partition wall need not be increased as compared with the case of using the honeycomb catalyst body for a diesel engine. Therefore, a high PM collection efficiency can be achieved without causing an increase in pressure loss by utilizing the honeycomb structure according to the present invention. Since the temperature of the honeycomb structure easily increases due to small heat capacity, the catalyst can be easily and continuously regenerated. Therefore, the honeycomb structure is suitable as a PM collection apparatus (purification apparatus) for a gasoline engine for which an increase in pressure loss (power loss) is particularly undesirable.

The honeycomb structure according to the present invention is preferably formed of a material that contains at least one ceramic selected from the group consisting of cordierite, aluminum titanate, silicon carbide, sialon, mullite, silicon nitride, zirconium phosphate, zirconia, titania, alumina, and silica. A honeycomb structure formed of such a material exhibits high heat resistance to maintain its function even when exposed to high-temperature exhaust gas.

In the honeycomb structure according to the present invention, the hydraulic diameter (m) of the cells and the permeability ($m^2$) of the partition wall preferably satisfy the relationship "(hydraulic diameter of cells)$^2$ / (permeability) = $1.0 \times 10^5$ to $4.5 \times 10^6$", and more preferably satisfy the relationship "(hydraulic diameter of cells)$^2$ / (permeability) = $1.5 \times 10^5$ to $2.5 \times 10^6$". If the value "(hydraulic diameter of cells)$^2$ / (permeability)" is less than $1.0 \times 10^5$, the cells may be clogged. If the value "(hydraulic diameter of cells)$^2$ / (permeability)" is more than $4.5 \times 10^6$, the pores formed in the partition wall may be clogged.

The term "hydraulic diameter of cells" used herein refers to a value calculated by "4 × (cross-sectional area) / (circumferential length)". The term "cross-sectional area" used in the above expression refers to the cell open area in a cross section perpendicular to the cell extension direction, and the term "circumferential length" used in the above expression refers to the length of the closed line that forms the cell in a cross section perpendicular to the cell extension direction.

The term "permeability" used herein refers to a value calculated by the following expression (1). The permeability is an index that indicates the flow resistance when a given gas passes through a specimen (partition wall). In expression (1), C indicates the permeability ($m^2$), F indicates the gas flow rate ($cm^3/s$), T indicates the thickness (cm) of the specimen, V indicates the gas viscosity (dynes·sec/$cm^2$), D indicates the diameter (cm) of the specimen, and P indicates the gas pressure (PSI). In expression (1), 13.839 PSI equals 1 atm, and 68947.6 dynes·sec/$cm^2$ equals I PSI.

$$C = \frac{8FTV}{\pi D^2 (P^2 - 13.839^2) / 13.839 \times 68947.6} \times 10^{-4} \qquad (1)$$

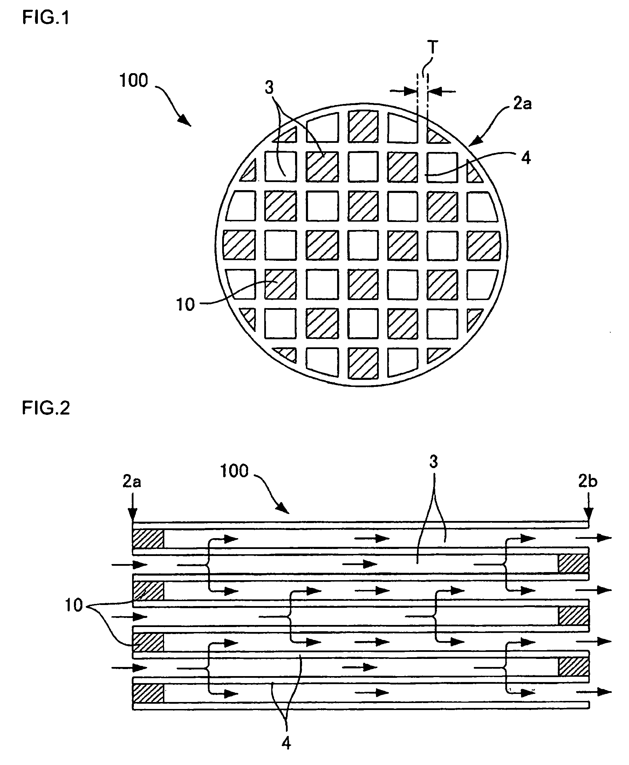

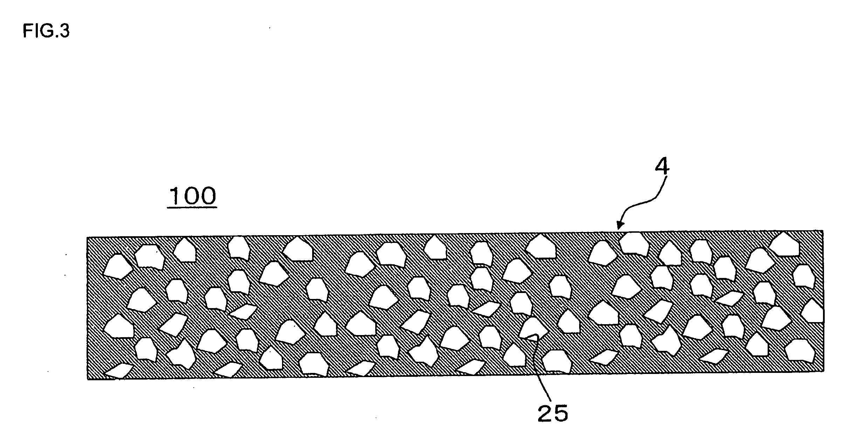

FIG. 1 is a front view schematically showing a honeycomb structure according to one embodiment of the present invention. FIG 2 is a cross-sectional view of the honeycomb structure shown in FIG. 1 along the cell extension direction. FIG 3 is an enlarged cross-sectional view of part of the honeycomb structure shown in FIG 2.

As shown in FIG 2, the honeycomb structure 100 shown in FIG 1 includes a porous partition wall 4 that has a number of pores 25 (see FIG 3) and is disposed to form a plurality of cells 3 that extend between two end faces 2a and 2b of the honeycomb structure, and plugging sections 10 that are disposed to plug the cells 3 on either of the end faces 2a and 2b. The honeycomb structure 100 shown in FIG. 1 is a wall-flow filter that exhibits a low pressure loss and a high particulate matter collection efficiency. The pores 25 formed in the partition wall 4 of the honeycomb structure 100 shown in FIG. 1 have an average pore size of about 8 to 30 µm.

It is preferable that the cross-sectional shape of the honeycomb structure along the direction perpendicular to the cell extension direction correspond to the inner shape of an exhaust system in which the honeycomb catalyst body is installed. Specific examples of the cross-sectional shape of the honeycomb structure include a circle, an ellipse, an oval, a trapezoid, a triangle, a quadrangle, a hexagon, an asymmetric shape, and the like. Among these, a circle, an ellipse, or an oval is preferable.

Examples of the cross-sectional shape of the cell along the direction perpendicular to the cell extension direction include a circle, an ellipse, an oval, a trapezoid, a triangle, a quadrangle, a hexagon, an octagon, an asymmetric shape, and the like. Among these, a circle, a hexagon, or an octagon is preferable. It is preferable that the cells that are plugged on the inlet side (i.e., the cells that are open on the outlet side) be smaller in size (open area) than the cells that are plugged on the outlet side (i.e., the cells that are open on the inlet side). When the open area of the cells that are open on the inlet side is larger than that of the cells that are open on the outlet side, a sufficient space remains in the cells even if PM or ash contained in combustion gas is deposited in the cells that are open on the inlet side during use. This makes it possible to suppress an increase in pressure loss due to deposition of ash.

[1-1] Partition wall

The partition wall has a number of pores (i.e., porous) and is disposed to form a plurality of cells that extend between two end faces of the honeycomb structure, and satisfies the above conditions. Such a partition wall allows exhaust gas that has entered the honeycomb structure through one end face to enter the adjacent cells so that particulate matter contained in the exhaust gas can be collected. The exhaust gas can thus be purified.

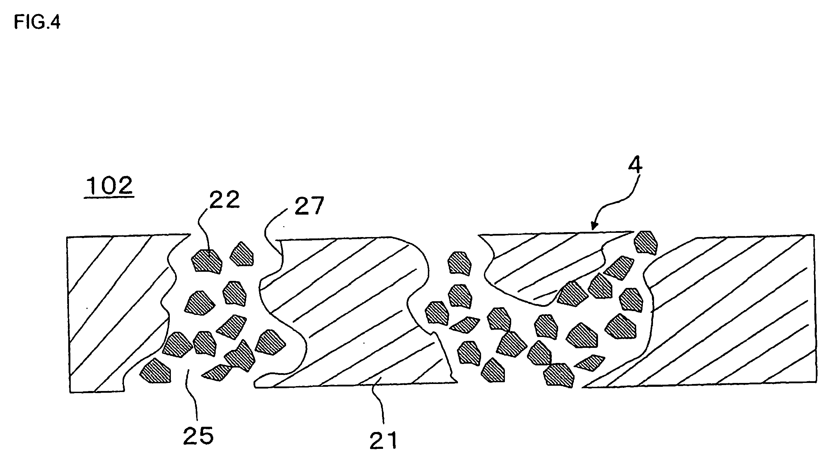

The partition wall may include a partition wall body that has a number of large pores (including through-holes), and particles (filling particles) that are positioned in the large pores. A partition wall having such a configuration can be easily produced. The partition wall may be formed an arbitrary material. FIG. 4 shows a honeycomb catalyst body 102 that includes a partition wall body 21 that has a number of large pores (through-holes) 27, and particles 22 that are positioned in the large pores 27. The partition wall 4 of the honeycomb catalyst body 102 has the pores 25 that are formed as a result of filling the large pores 27 with the particles 22.

The thickness of the partition wall is 76.2 $\mu$m (3 mil) to 177.8 $\mu$m (7 mil), and preferably 76.2 $\mu$m (3 mil) to 127.0 $\mu$m (5 mil). If the thickness of the partition wall is less than 76.2 $\mu$m, a decrease in strength of the partition wall and a decrease in exhaust gas particulate matter collection efficiency may occur. If the thickness of the partition wall is more than 177.8 $\mu$m, the pressure loss may increase. Note that one mil equals one thousandth of an inch (about 0.025 mm). Note that the thickness of the partition wall used herein refers to a value measured using a scanning electron microscope (SEM). In FIG. 1, the thickness of the partition wall is indicated by "T".

The average pore size of the partition wall is 8 to 30 $\mu$m, and preferably 10 to 15 $\mu$m. If the average pore size of the partition wall is less than 8 $\mu$m, the pressure loss may increase. If the average pore size of the partition wall is more than 30 $\mu$m, the PM collection efficiency may decrease. The term "average pore size" used herein refers to a value measured using a mercury porosimeter.

The porosity of the partition wall is 10 to 35%, and preferably 20 to 30%. If the porosity of the partition wall is less than 10%, the pressure loss may increase. If the porosity of the partition wall is more than 35%, the strength of the partition wall may decrease. The term "porosity" used herein refers to a value measured using a mercury porosimeter.

The cell density is 12.4 cells/cm$^2$ (80 cpsi) to 45.0 cells/cm$^2$ (290 cpsi), and preferably 15.5 cells/cm$^2$ (100 cpsi) to 38.8 cells/cm$^2$ (250 cpsi). If the cell density is less than 12.4 cells/cm$^2$, a decrease in strength of the partition wall, an increase in filtration flow rate, and a decrease in PM collection efficiency may occur. If the cell density is more than 45.0 cells/cm$^2$, the pressure loss may increase. Note that the unit "cpsi" is an abbreviation for "cells per square inch".

In the honeycomb structure according to the present invention, the ratio of the total open area of the cells to the sum of the cross-sectional area of the partition wall and the total open area of the cells in the cross section perpendicular the cell extension direction (hereinafter may be referred to as "cell open frontal area") is 83 to 90%, and more preferably 86 to 88%. If the cell open frontal area is less than 83%, the pressure loss may increase. If the cell open frontal area is more than 90%, a decrease in strength of the partition wall, an increase in filtration flow rate, and a decrease in PM collection efficiency may occur.

The permeability of the partition wall is preferably $1.0\times10^{-12}$ to $6.0\times10^{-12}$ m$^2$, and more preferably $1.5\times10^{-12}$ to $4.0\times10^{-12}$ m$^2$. If the permeability of the partition wall is less than $1.0\times10^{-12}$ m$^2$, the pressure loss may increase. If the permeability of the partition wall is more than $6.0\times10^{-12}$ m$^2$, the PM collection efficiency may decrease.

The honeycomb structure according to the present invention preferably has a thermal expansion coefficient of $1.0\times10^{-6}$/°C or less measured at 40 to 800°C in the cell extension direction. When using the honeycomb structure as a catalyst body (i.e., a catalyst is supported on the honeycomb structure), the honeycomb structure more preferably has has a thermal expansion coefficient of $0.8\times10^{-6}$/°C or less measured at 40 to 800°C in the cell extension direction, and particularly preferably $0.5\times10^{-6}$/°C or less. If the thermal expansion coefficient is more than $1.0\times10^{-6}$/°C, a thermal stress may occur during use at a high temperature so that breakage may occur. The term "coefficient of thermal expansion" used herein refers to a value measured by push-rod dilatometry.

[1-2] Plugging section

The plugging sections are disposed to plug the cells on either of the end faces or inside the cells. A honeycomb structure that shows a low pressure loss and exhibits a high exhaust gas particulate matter (PM) collection efficiency can be obtained by utilizing such plugging sections.

The plugging section may be formed of the same material as that of the partition wall, or may be formed of a material different from that of the partition wall. The material for the plugging section (i.e., plugging slurry) may be obtained by mixing a ceramic raw material, a surfactant, and water optionally together with a sintering aid, a pore-forming agent, and the like to prepare a slurry, and kneading the slurry using a mixer or the like. Examples of the ceramic raw material include $\alpha$-alumina, calcined bauxite, aluminum sulfate, aluminum chloride, aluminum hydroxide, rutile form titanium, anatase form titanium, ilmenite, electro-fused magnesium, magnesite, electro-fused spinel, kaolin, silica glass, quartz, fused silica, and the like. Examples of the surfactant include a fatty acid soap, a fatty acid ester, a polyalcohol, and the like.

The arrangement of the plugging sections is not particularly limited insofar as the plugging sections are disposed to plug the cells on either of the end faces or inside the cells. For example, it is preferable that the plugging sections be disposed in a checkered pattern (see the plugging sections 10 of the honeycomb structure 100 shown in FIGS. 1 and 2).

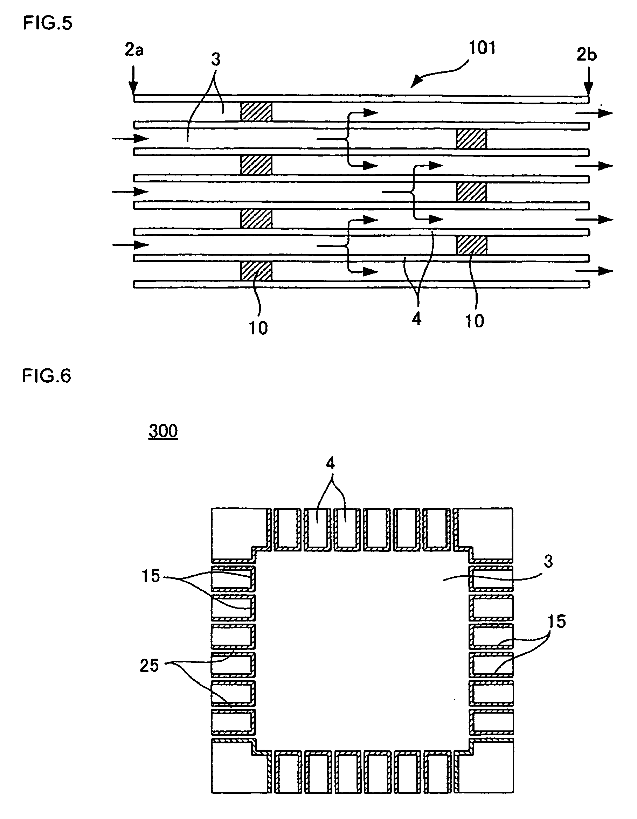

FIG 5 is a cross-sectional view schematically showing a honeycomb structure according to another embodiment of the present invention. FIG 5 corresponds to FIG. 2. In a honeycomb structure 101 shown in FIG 4, the plugging sections 10 may be disposed to plug the cells 3 inside the cells 3. According to this configuration, since exhaust gas passes through the partition wall at least twice, the PM collection efficiency increases.

[2] Method of producing honeycomb structure

The honeycomb structure according to the present invention may be produced as follows, for example. Specifically, a cordierite-forming raw material is provided as a material for kneaded clay. The cordierite-forming raw material is prepared by mixing a silica source component, a magnesia source component, an alumina source component, and the like in a cordierite crystal theoretical composition. It is preferable to use quartz or fused silica as the silica source component. The particle size of the silica source component is preferably 100 to 150 $\mu$m.

Examples of the magnesia source component include talc, magnesite, and the like. Among these, talc is preferable. The content of talc in the cordierite-forming raw material is preferably 37 to 43 mass%. The particle size (average particle size) of talc is preferably 5 to 50 $\mu$m, and more preferably 10 to 40 $\mu$m. The magnesia (MgO) source component may contain $Fe_2O_3$, CaO, $Na_2O$, $K_2O$, and the like as impurities.

The alumina source component preferably contains at least one of aluminum oxide and aluminum hydroxide due to a low impurity content. The content of aluminum hydroxide in the cordierite-forming raw material is preferably 10 to 30 mass%, and the content of aluminum oxide in the cordierite-forming raw material is preferably 0 to 20 mass%.

A clay material (additive) added to the cordierite-forming raw material is also provided. At least a binder and a pore-forming material are used as additives. A dispersant and a surfactant may be used in addition to the binder and the pore-forming material.

A low-melting-point reactant may be used as the pore-forming material. The low-melting-point reactant may be at least one metal selected from the group consisting of iron, copper, zinc, lead, aluminum, and nickel, an alloy that contains the above metal as the main component (e.g., carbon steel, cast iron, or stainless steel when using iron), or an alloy that contains two or more of the above metals as the main component. The low-melting-point reactant is preferably a powdery or fibrous iron alloy. The particle size or the fiber diameter (average diameter) of the iron alloy is preferably 10 to 200 $\mu$m. The low-melting-point reactant may have a spherical shape, a diamond shape, or the like. The shape of the pores can be easily controlled if the low-melting-point reactant has such a shape.

Examples of the binder include hydroxypropyl methyl cellulose, methyl cellulose, hydroxyethyl cellulose, carboxymethyl cellulose, polyvinyl alcohol, and the like. Examples of the dispersant include dextrin, a polyalcohol, and the like. Examples of the surfactant include a fatty acid soap and the like. These additives may be used either individually or in combination.

Hundred parts by mass of the cordierite-forming raw material, 3 to 8 parts by mass of the binder, 3 to 40 parts by mass of the pore-forming material, 0.1 to 2 parts by mass of the dispersant, and 10 to 40 parts by mass of water are mixed and kneaded to obtain a kneaded clay.

The kneaded clay is formed into a honeycomb shape by an extrusion forming method, an injection forming method, a press forming method, or the like to obtain a honeycomb formed body. It is preferable to use the extrusion forming method since the kneaded clay can be continuously formed," and cordierite crystals can be oriented. The extrusion forming method may be implemented using a vacuum kneader, a ram extruder, a twin-screw continuous extruder, or the like.

The honeycomb formed body is then dried and fired to obtain an intermediate honeycomb structure. The honeycomb formed body may be dried by hot-air drying, microwave drying, dielectric drying, drying under reduced pressure, vacuum drying, freeze drying, or the like. It is preferable to dry the honeycomb formed body by hot-air drying and microwave drying or dielectric drying since the entire honeycomb formed body can be dried quickly and uniformly. The dried honeycomb formed body is fired to obtain an intermediate honeycomb structure provided with a partition wall having pores with an average pore size of 8 to 300 $\mu$m. The honeycomb formed body formed using the cordierite-forming raw material is normally fired at 1410 to 1440°C for 3 to 15 hours in the air.

When using the low-melting-point reactant as the pore-forming material, the partition wall has large pores (average pore size: about 100 to 300 $\mu$m). When forming large pores in the partition wall using the low-melting-point reactant, a slurry that contains filling particles having an average particle size of 5 to 20 $\mu$m is prepared, and the pores formed in the partition wall are filled with the slurry. The honeycomb formed body is then dried and fired to reduce the average pore size of the pores formed in the partition wall. The filling particles may be formed of the same material as the material for the honeycomb structure. Specific examples of the material for the filling particles include cordierite, SiC, aluminum titanate, and the like. The pores may be filled with the slurry by a pressurization method, a suction method, or the like. The average pore size of the partition wall may be adjusted by adjusting the particle size of the filling particles. FIG 4 shows an example forming a partition wall in which large pores are formed using the low-melting-point reactant as the pore-forming material, and filling the pores formed in the partition wall with filling particles to reduce the average pore size of the pores formed in the partition wall.

A honeycomb structure (honeycomb structure body) in which the cells are not plugged is thus obtained.

A raw material for the plugging section is provided. The material for the plugging sections (i.e., plugging slurry) may be the same as or different from the material for kneaded clay used for the honeycomb structure body. Specifically, the material for the plugging section (i.e., plugging slurry) may be obtained by mixing a ceramic raw material, a surfactant, and water optionally together with a sintering aid, a pore-forming agent, and the like to prepare a slurry, and kneading the slurry using a mixer or the like.

The cells that are not to be plugged are masked on one end face of the honeycomb structure body, and the one end face of the honeycomb structure body is immersed in the plugging slurry in a container to fill the unmasked cells with the plugging slurry. The honeycomb structure body is then dried and fired to obtain a honeycomb structure body (i.e., honeycomb structure) provided with the plugging sections. The drying/firing conditions may be the same as the drying/firing conditions for the honeycomb formed body.

[3] Application of honeycomb structure

The honeycomb structure according to the present invention may be used for a purification apparatus that supports a catalyst (e.g., three-way catalyst), for example. In this case, the honeycomb structure according to the present invention may be directly used for the purification apparatus, or a honeycomb catalyst body obtained by causing an oxidizing catalyst to be supported on at least one of the surface of the pores formed in the partition wall and the surface of the partition wall of the honeycomb structure according to the present invention may be used for the purification apparatus. FIG 6 is an enlarged schematic view of part of the honeycomb catalyst body. In a honeycomb structure 300 shown in FIG 6, a catalyst 15 is supported on the surface of the partition wall 4 that forms the cells 3 and the surface of the pores 25.

When directly using the honeycomb structure according to the present invention for the purification apparatus, exhaust gas can be purified by introducing the exhaust gas into the cells 3 through one end face 2a of the honeycomb structure 100, and discharging the exhaust gas that has passed through the pores formed in the partition wall 4 through the other end face 2b (see FIG 2). Specifically, since particulate matter contained in the exhaust gas cannot pass through the pores formed in the partition wall 4 (i.e., trapped by the surface of the partition wall 4), purified gas can be discharged through the other end face 2b.

When using the honeycomb structure for the honeycomb catalyst body 300 shown in FIG 6, exhaust gas that has been introduced into the cells 3 through one end face of the honeycomb catalyst body 300 comes in contact with the catalyst 15 supported on the surface of the partition wall 4 and the surface of the pores 25. Therefore, the exhaust gas is purified by the catalyst 15, and discharged to the outside through the other end face.

The oxidizing catalyst may contain a noble metal such as platinum or palladium.

A noble metal, a promoter, a noble metal holding material, or the like may also be used. Examples of the noble metal include platinum (Pt), rhodium (Rh), palladium (Pd), and the like. These noble metals may be used in combination. Examples of the promoter include alumina, zirconia, ceria, and the like.

A three-way catalyst may be supported instead of the oxidizing catalyst. The three-way catalyst may contain a noble metal such as platinum or palladium.

The total amount of the catalyst and other materials is preferably 5 to 50 g/L, and more preferably 10 to 30 g/L. If the amount is less than 5 g/L, the noble metal dispersed in the catalyst tends to aggregate. As a result, the catalytic function may deteriorate so that the purification performance may deteriorate. If the amount is more than 50 g/L, the pores formed in the partition wall may be clogged so that the pressure loss may increase.

EXAMPLES

The present invention is further described below by way of examples. Note that the present invention is not limited to the following examples.

Hydraulic diameter (m) of cells

The cell open area (cross-sectional area) in a cross section perpendicular to the cell extension direction, and the length (circumferential length) of the closed line forming the cell in a cross section perpendicular to the cell extension direction were measured for a plurality of (20) cells. The average value of the values calculated by "4 × (cross-sectional area) / (circumferential length)" was taken as the hydraulic diameter (m) of the cells.

Permeability (m²)

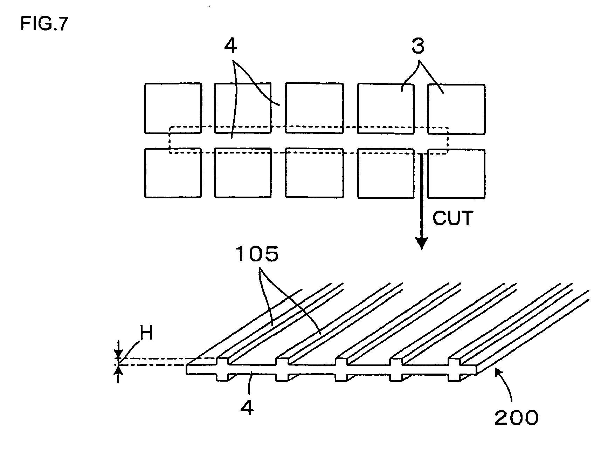

The permeability was calculated as follows. As shown in FIG. 7, a honeycomb structure 100 was cut into a specimen 200 so that a part (rib 105) of the partition wall 4 remained to have a rib height H of 0.2 mm. The specimen 200 may have a rectangular shape or a disc-like shape. Air at room temperature was passed through the specimen 200, and the permeability was calculated by the following expression (1). FIG. 7 is a schematic view illustrative of the specimen used to measure the permeability.

$$C = \frac{8\,F\,T\,V}{\pi D^2 (P^2 - 13.839^2)/13.839 \times 68947.6} \times 10^{-4} \quad (1)$$

It is desirable to use a fluid seal (e.g., grease) so that air does not leak through the opening between the specimen 200 and a seal formed by the rib 105. The permeability was measured at an air flow rate that was adjusted so that the calculated flow rate through the partition wall was 0.1 to 1 cm/sec. When measuring the permeability of the partition wall of a honeycomb catalyst body, the amount of catalyst layer may differ between the inner wall surface and the cross section of the cells. However, the permeability of the partition wall of the honeycomb catalyst body produced using the honeycomb structure according to the present invention can be measured in the same manner as the honeycomb structure.

In expression (1), C indicates the permeability (m²), F indicates the gas flow rate (cm³/s), T indicates the thickness (cm) of the specimen, V indicates the gas viscosity (dynes·sec/cm²), D indicates the diameter (cm) of the specimen, and P indicates the gas pressure (PSI). In expression (1), 13.839 PSI equals 1 atm, and 68947.6 dynes·sec/cm² equals 1 PSI.

The permeability was measured using a "Capillary Flow Porometer 1100AEX" (manufactured by Porous Materials, Inc.).

Thickness (μm) of partition wall

One end face of the honeycomb structure was observed using a scanning electron microscope (SEM). The thickness was measured for an arbitrarily selected ten areas of the partition wall, and the average thickness was taken as the thickness of the partition wall.

Average pore size (μm)

The pore size (pore size) calculated from the pressure when the cumulative mercury volume injected into a porous substrate reached 50% of the total pore volume of the porous substrate was measured using a mercury porosimeter (mercury intrusion method). As the mercury porosimeter, an "Auto Pore III 9405" (manufactured by Micrometrics) was used.

Porosity (%)

The porosity was measured using a mercury porosimeter (mercury intrusion method) in the same manner as the average pore size.

Cell density

One end face of the honeycomb structure was observed using a scanning electron microscope (SEM). The number of cells present in an arbitrarily selected area was measured to calculate the cell density.

Cell open frontal area

The ratio of the total open area of the cells to the sum of the cross-sectional area of the partition wall and the total open area of the cells in the cross section perpendicular to the cell extension direction was calculated, and taken as the cell open frontal area.

Thermal expansion coefficient

The thermal expansion coefficient was measured by push-rod dilatometry.

Pressure loss

Air was circulated through the honeycomb structure at room temperature at a flow rate of 0.5 m$^3$/min to measure the pressure loss. The pressure loss (reference pressure loss) of a comparison honeycomb structure having an identical shape, an identical cell density, and an identical partition wall thickness was measured, and the ratio (pressure drop increase rate (%)) with respect to the reference pressure loss was calculated. A case where the pressure drop increase rate was 20% or more was evaluated as "Bad", and a case where the pressure drop increase rate was less than 20% was evaluated as "Good".

PM collection efficiency

Exhaust gas discharged from a diesel burner was introduced into the honeycomb structure at a particulate matter (PM) concentration of 1 mg/m$^3$, a temperature of 200°C, and a flow rate of 2.4 Nm$^3$/min, and the number of PM (PM particle count) was measured on the upstream side (before the exhaust gas was introduced into the honeycomb structure) and the downstream side (after the exhaust gas was discharged from the honeycomb structure). The PM collection efficiency was calculated by "((upstream-side PM particle count) - (downstream-side PM particle count)) / (upstream-side PM particle count) $\times$ 100". The PM particle count was measured using a "Scanning Mobility Particle Sizer (SMPS)" (manufactured by TSI). A case where the PM collection efficiency was 80% or more was evaluated as "Good", and a case where the PM collection efficiency was less than 80% was evaluated as "Bad".

Hydrostatic strength

A hydrostatic pressure was applied to the outer circumferential surface of the honeycomb structure covered with rubber, and the pressure when the honeycomb structure broke was measured. A case where the honeycomb structure broke at a pressure of less than 2.0 MPa was evaluated as "Bad", and a case where the honeycomb structure broke at a pressure of 2.0 MPa or more was evaluated as "Good".

Clogging of partition wall due to soot

The honeycomb structure was installed in the exhaust system of an automobile equipped with a direct injection gasoline engine (displacement: 2.0L) at a position under the floor. The automobile was operated on a chassis dynamo five times in the European NEDC mode. A case where the pressure loss increase rate was less than 1.1% was evaluated as "Good", and a case where the pressure loss increase rate was 1.1% or more was evaluated as "Bad".

Exhaust gas purification performance

The honeycomb structure (honeycomb catalyst body) was installed in the exhaust system of an automobile equipped with a direct injection gasoline engine (displacement: 2.0 L) at a position under the floor. The automobile was operated on a chassis dynamo in the European NEDC mode to measure the emissions of carbon monoxide, unburnt hydrocarbons, and nitrogen oxides. The emissions of carbon monoxide, unburnt hydrocarbons, and nitrogen oxides were also measured using a flow-through honeycomb catalyst body (partition wall thickness: 100 $\mu$m, cell density: 93 cells/cm$^2$) supporting an identical amount of an identical catalyst. The measured emission values were then compared. A case where the emissions were larger than those of the comparison honeycomb catalyst body was evaluated as "Bad", and a case where the emissions were smaller than those of the comparison honeycomb catalyst body was evaluated as "Good".

Example 1

A raw material was prepared as shown in Table I (average particle size and mixing ratio). Specifically, 39.7 mass% of talc (average particle size: 22 $\mu$m), 51.2 mass% of kaolin (average particle size: 7 $\mu$m), 5.5 mass% of aluminum oxide (average particle size: 6 $\mu$m), and 12.7 mass% of aluminum hydroxide (average particle size: 1 $\mu$m) were mixed

to prepare a material for kneaded clay.

Hundred parts by mass of the material for kneaded clay, 8 parts by mass of hydroxypropyl methyl cellulose (binder), 0.1 parts by mass of potassium laurate soap (dispersant), and 35 parts by mass of water were mixed and kneaded to obtain a kneaded clay having plasticity. The kneaded clay was formed into a cylindrical shape using a vacuum deairing machine, and formed into a honeycomb shape having a given partition wall thickness and a given cell density using an extruder to obtain a honeycomb formed body. The honeycomb formed body was dielectric-dried, hot-air-dried, and fired at 1420°C for 10 hours to obtain an intermediate honeycomb structure provided with a partition wall having pores with an average pore size of 8 to 30 $\mu$m.

The end faces of the honeycomb structure body were plugged alternately (in a checkered pattern) using the same material (plugging slurry) as the material for kneaded clay, and the honeycomb structure body was fired at 1420°C for four hours to obtain a honeycomb structure. The honeycomb structure had a diameter of 105 mm, a length of 114 mm, and a plugging depth of 5 mm. The honeycomb structure was subjected to the above measurements and evaluations.

The honeycomb structure of Example 1 had a partition wall thickness of 81.3 $\mu$m (3.2 mil), a cell density of 43.4 cells/cm$^2$ (280 cpsi), a cell hydraulic diameter of 0.00144 m, a cell open frontal area of 89.6%, an average pore size of 1.3 $\mu$m, a porosity of 27%, a permeability of $1.56 \times 10^{-12}$, and a value "(hydraulic diameter of cells)$^2$ / (permeability)" of $1.32 \times 10^5$. The pressure loss evaluation result was "Good", the PM collection efficiency evaluation result was "Good", the partition wall strength evaluation result was "Good", the partition wall clogging evaluation result was "Good", and the exhaust gas purification performance evaluation result was also "Good".

Examples 2 to 4, 6 to 9, and 11 to 17 and Comparative Examples 1 to 8

In Examples 2 to 4, 6 to 9, and 11 to 17 and Comparative Examples 1 to 8, a kneaded clay was prepared in the same manner as described above, except that the mixing ratio and the raw material particle size were changed as shown in Table 1. A honeycomb structure shown in Table 2 was obtained in the same manner as in Example 1. The measurement and evaluation results for the resulting honeycomb structure are shown in Tables 2 and 3.
TABLE 1

| | Main raw material | | | | | | Pore-forming material | |
|---|---|---|---|---|---|---|---|---|
| | Talc mass% (average particle size) | Kaolin mass% (average particle size) | Quartz mass% (average particle size) | Fused silica mass% (average particle size) | Aluminum oxide mass% (average particle size) | Aluminum hydroxide particle size) | Iron powder mass% (average particle size) | Graphite mass% (average particle size) |
| Example 1 | 39.7 (22 μm) | 51.2 (7 μm) | 0 | 0 | 5.5 (6 μm) | 12.7 (1 μm) | 0 | 0 |
| Example 2 | 39.7 (22 μm) | 51.2 (7 μm) | 0 | 0 | 5.5 (6 μm) | 12.7 (1 μm) | 0 | 0 |
| Example 3 | 39.7 (22 μm) | 51.2 (7 μm) | 0 | 0 | 5.5 (6 μm) | 12.7 (1 μm) | 0 | 0 |
| Example 4 | 39.7 (22 μm) | 51.2 (7 μm) | 0 | 0 | 5.5 (6 μm) | 12.7 (1 μm) | 0 | 0 |
| Example 5 | 40 (32 μm) | 19 (35 μm) | 12 (116 μm) | - | 14 (6 μm) | 15 (3 μm) | 20 (30 μm) | 0 |
| Example 6 | 39.7 (22 μm) | 51.2 (7 μm) | 0 | 0 | 5.5 (6 μm) | 12.7 (1 μm) | 0 | 0 |
| Example 7 | 39.7 (22 μm) | 51.2 (7 μm) | 0 | 0 | 5.5 (6 μm) | 12.7 (1 μm) | 0 | 0 |
| Example 8 | 39.7 (22 pm) | 51.2 (7 μm) | 0 | 0 | 5.5 (6 μm) | 12.7 (1 μm) | 0 | 0 |
| Example 9 | 39.4 (22 μm) | 21.5 (7 μm) | 0 | 10 (30 μm) | 8.7 (6 μm) | 20.3 (1 μm) | 0 | 0 |
| Example 10 | 40 (35 μm) | 19 (35 μm) | 12 (116 μm) | - | 14 (6 μm) | 15 (3 μm) | 20 (30 μm) | 0 |
| Example 11 | 39.7(22 μm) | 51.2 (7 μm) | 0 | 0 | 18.2 (6 μm) | 0 | 0 | 0 |
| Example 12 | 39.7 (22 μm) | 51.2 (7 μm) | 0 | 0 | 18.2 (6 μm) | 0 | 0 | 0 |
| Example 13 | 39.7 (22 μm) | 51.2 (7 μm) | 0 | 0 | 18.2 (6 μm) | 0 | 0 | 0 |
| Example 14 | 39.7 (22 μm) | 51.2 (7 μm) | 0 | 0 | 18.2 (6 μm) | 0 | 0 | 0 |
| Example 15 | 39.7 (22 μm) | 51.2 (7 μm) | 0 | 0 | 18.2 (6 μm) | 0 | 0 | 0 |
| Example 16 | 39.4 (22 μm) | 21.5 (7 μm) | 0 | 10 (30 μm) | 29.0 (6 μm) | 0 | 0 | 0 |
| Example 17 | 39.6 (32 μm) | 31.8 (7 μm) | 0 | 5 (30 μm) | 7.1 (6 μm) | 16.5 (1 μm) | 0 | 0 |
| Comparative Example 1 | 39.7 (22 μm) | 51.2 (7 μm) | 0 | 0 | 18.2 (6 μm) | 0 | 0 | 0 |
| Comparative Example 2 | 39.7 (50 μm) | 51.2 (7 μm) | 0 | 0 | 18.2 (6 μm) | 0 | 0 | 10 (50 μm) |

(continued)

| | Main raw material | | | | | | Pore-forming material | |
|---|---|---|---|---|---|---|---|---|
| | Talc mass% (average particle size) | Kaolin mass% (average particle size) | Quartz mass% (average particle size) | Fused silica mass% (average particle size) | Aluminum oxide mass% (average particle size) | Aluminum hydroxide particle size) | Iron powder mass% (average particle size) | Graphite mass% (average particle size) |
| Comparative Example 3 | 40 (35 $\mu$m) | 19 (7 $\mu$m) | 12 (116 $\mu$m) | - | 14 (6 $\mu$m) | 15 (3 $\mu$m) | 0 | 0 |
| Comparative Example 4 | 39.7 (50 $\mu$m) | 51.2 (7 $\mu$m) | 0 | 0 | 18.2 (6 $\mu$m) | 0 | 0 | 10(50 $\mu$m) |
| Comparative Example 5 | 40 (20 $\mu$m) | 19 (7 $\mu$m) | 12 (116 $\mu$m) | - | 14 (6 $\mu$m) | 15 (3 $\mu$m) | 0 | 0 |
| Comparative Example 6 | 39.4 (22 $\mu$m) | 21.5 (7 $\mu$m) | 0 | 10 (30 $\mu$m) | 29.1 (6 $\mu$m) | 0 | 0 | 0 |
| Comparative Example 7 | 39.4 (22 $\mu$m) | 21.5 (7 $\mu$m) | 0 | 10 (30 $\mu$m) | 29.1 (6 $\mu$m) | 0 | 0 | 0 |
| Comparative Example 8 | 39.4 (22 $\mu$m) | 21.5 (7 $\mu$m) | 0 | 10 (30 $\mu$m) | 29.1 (6 $\mu$m) | 0 | 0 | 0 |

TABLE 2

| | Rib thickness | | Cell density | | Cell hydraulic diameter (d) (m) | Open frontal area (OFA) (%) | Pore size ($\mu$m) | Porosity (%) | Partition wall permeability ($m^2$) | $d^2/P$ |
|---|---|---|---|---|---|---|---|---|---|---|
| | (mil) | ($\mu$m) | (cpsi) | (/$cm^2$) | | | | | | |
| Example 1 | 3.2 | 8.128 | 280 | 43.4 | 0.00144 | 89.6 | 13 | 27 | $1.56 \times 10^{-12}$ | $1.32 \times 10^6$ |
| Example 2 | 3.5 | 8.890 | 250 | 38.8 | 0.00152 | 89.2 | 13 | 27 | $1.56 \times 10^{-12}$ | $1.48 \times 10^6$ |
| Example 3 | 4.5 | 11.430 | 180 | 27.9 | 0.00178 | 88.3 | 13 | 27 | $1.56 \times 10^{-12}$ | $2.03 \times 10^6$ |
| Example 4 | 4.5 | 11.430 | 200 | 31.0 | 0.00168 | 87.7 | 13 | 27 | $1.56 \times 10^{-12}$ | $1.81 \times 10^6$ |
| Example 5 | 4.5 | 11.430 | 200 | 31.0 | 0.00168 | 87.7 | 20 | 15 | $2.05 \times 10^{-12}$ | $1.38 \times 10^6$ |
| Example 6 | 4.5 | 11.430 | 200 | 31.0 | 0.00168 | 87.7 | 13 | 30 | $1.7 \times 10^{-12}$ | $1.63 \times 10^6$ |
| Example 7 | 4.5 | 11.430 | 200 | 31.0 | 0.00168 | 87.7 | 11 | 33 | $1.37 \times 10^{-12}$ | $2.07 \times 10^6$ |
| Example 8 | 4.5 | 11.430 | 200 | 31.0 | 0.00168 | 87.7 | 11 | 27 | $1.12 \times 10^{-12}$ | $2.53 \times 10^6$ |
| Example 9 | 4.5 | 11.430 | 200 | 31.0 | 0.00168 | 87.7 | 9.5 | 34 | $1.05 \times 10^{-12}$ | $2.70 \times 10^6$ |
| Example 10 | 4.5 | 11.430 | 200 | 31.0 | 0.00168 | 87.7 | 27 | 11 | $2.74 \times 10^{-12}$ | $1.03 \times 10^6$ |
| Example 11 | 6.7 | 17.018 | 100 | 15.5 | 0.00237 | 87.0 | 13 | 27 | $1.56 \times 10^{-12}$ | $3.60 \times 10^6$ |
| Example 12 | 7.9 | 20.320 | 80 | 12.4 | 0.00264 | 86.2 | 13 | 27 | $1.56 \times 10^{-12}$ | $4.46 \times 10^6$ |
| Example 13 | 6.7 | 17.018 | 100 | 15.5 | 0.00237 | 87.0 | 13 | 27 | $1.56 \times 10^{-12}$ | $3.60 \times 10^6$ |
| Example 14 | 6 | 15.240 | 100 | 15.5 | 0.00239 | 88.4 | 13 | 27 | $1.56 \times 10^{-12}$ | $3.66 \times 10^6$ |
| Example 15 | 5.2 | 13.208 | 100 | 15.5 | 0.00241 | 89.9 | 13 | 27 | $1.56 \times 10^{-12}$ | $3.72 \times 10^6$ |
| Example 16 | 5 | 12.700 | 150 | 23.3 | 0.00195 | 88.1 | 14 | 27 | $1.81 \times 10^{-12}$ | $2.10 \times 10^6$ |
| Example 17 | 6.5 | 16.510 | 170 | 26.4 | 0.00178 | 83.8 | 15 | 27 | $2.08 \times 10^{-12}$ | $1.53 \times 10^6$ |
| Comparative Example 1 | 1.5 | 3.810 | 180 | 27.9 | 0.00186 | 96.0 | 7 | 27 | $4.52 \times 10^{-13}$ | $7.6 \times 10^6$ |
| Comparative Example 2 | 12 | 30.480 | 300 | 46.5 | 0.00116 | 62.8 | 38 | 40 | $1.97 \times 10^{-13}$ | $6.83 \times 10^4$ |
| Comparative Example 3 | 12 | 30.480 | 300 | 46.5 | 0.00116 | 62.8 | 38 | 15 | $7.41 \times 10^{-12}$ | $1.82 \times 10^5$ |
| Comparative Example 4 | 12 | 30.480 | 70 | 10.9 | 0.00273 | 80.9 | 7 | 40 | $6.70 \times 10^{-13}$ | $1.11 \times 10^7$ |

| | Rib thickness | | Cell density | | Cell hydraulic diameter (d) (m) | Open frontal area (OFA) (%) | Pore size (μm) | Porosity (%) | Partition wall permeability (m$^2$) | d$^2$/P |
|---|---|---|---|---|---|---|---|---|---|---|
| | (mil) | (μm) | (cpsi) | (/cm$^2$) | | | | | | |
| Comparative Example 5 | 17 | 43.18 | 70 | 10.9 | 0.00260 | 73.6 | 5 | 9 | $7.69 \times 10^{-14}$ | $8.82 \times 10^{7}$ |
| Comparative Example 6 | 7.2 | 18.288 | 300 | 46.5 | 0.00128 | 76.6 | 6 | 27 | $3.32 \times 10^{-13}$ | $4.96 \times 10^{6}$ |
| Comparative Example 7 | 8 | 20.32 | 300 | 46.5 | 0.00126 | 74.2 | 5 | 32 | $2.74 \times 10^{-13}$ | $5.84 \times 10^{6}$ |
| Comparative Example 8 | 9 | 22.86 | 300 | 46.5 | 0.00124 | 71.3 | 5 | 32 | $2.74 \times 10^{-13}$ | $5.60 \times 10^{6}$ |

TABLE 3

|  | Pressure loss | PM collection efficiency | Hydrostatic strength | Clogging of partition wall due to soot |
|---|---|---|---|---|
| Example 1 | Good | Good | Good | Good |
| Example 2 | Good | Good | Good | Good |
| Example 3 | Good | Good | Good | Good |
| Example 4 | Good | Good | Good | Good |
| Example 5 | Good | Good | Good | Good |
| Example 6 | Good | Good | Good | Good |
| Example 7 | Good | Good | Good | Good |
| Example 8 | Good | Good | Good | Good |
| Example 9 | Good | Good | Good | Good |
| Example 10 | Good | Good | Good | Good |
| Example 11 | Good | Good | Good | Good |
| Example 12 | Good | Good | Good | Good |
| Example 13 | Good | Good | Good | Good |
| Example 14 | Good | Good | Good | Good |
| Example 15 | Good | Good | Good | Good |
| Example 16 | Good | Good | Good | Good |
| Example 17 | Good | Good | Good | Good |
| Comparative Example 1 | Bad | Bad | Bad | Bad |
| Comparative Example 2 | Bad | Bad | Good | Bad |
| Comparative Example 3 | Bad | Bad | Good | Bad |
| Comparative Example 4 | Bad | Good | Good | Bad |
| Comparative Example 5 | Bad | Good | Good | Bad |
| Comparative Example 6 | Bad | Good | Good | Bad |
| Comparative Example 7 | Bad | Good | Good | Bad |
| Comparative Example 8 | Bad | Good | Good | Bad |

Examples 5 and 10

As shown in Table 1, 40 mass% of talc (average particle size: 32 μm), 19 mass% of kaolin (average particle size: 35 μm), 12 mass% of quartz (average particle size: 116 μm), 14 mass% of aluminum oxide (average particle size: 6 μm), 15 mass% of aluminum hydroxide (average particle size: 3 μm), and 20 mass% of iron powder (pore-forming material) (average particle size: 30 μm) were mixed to prepare a material for kneaded clay.

The material for kneaded clay was processed in the same manner as in Example 1 to obtain an intermediate honeycomb structure provided with a partition wall having pores with an average pore size of 100 to 300 $\mu$m.

A slurry containing cordierite particles having an average particle size of 20 $\mu$m was prepared. The pores formed in the partition wall of the intermediate honeycomb structure were filled with the slurry. The intermediate honeycomb structure was then dried and fired under the same conditions as those for the honeycomb formed body to obtain a honeycomb structure (i.e., honeycomb structure body) in which the cells were not plugged.

Example 18

A honeycomb structure was obtained in the same manner as in Example 1, except that the conditions were changed as shown in Table 4. A catalyst slurry containing an oxidizing catalyst (platinum and alumina) was applied to and supported on the surface of the partition wall and the pore inner surface of the honeycomb structure by a suction method so that the density was 15 g/L. The honeycomb structure was then dried by heating to form a catalyst coating layer on the surface of the partition wall and the pore inner surface of the honeycomb structure to obtain a honeycomb catalyst body.

The honeycomb structure of Example 18 had a partition wall thickness of 81.3 $\mu$m (3.2 mil), a cell density of 43.4 cells/cm$^2$ (280 cpsi), a cell hydraulic diameter of 0.00144 m, a cell open frontal area of 89.6%, an average pore size of 12 $\mu$m, a porosity of 26%, a permeability of $1.28 \times 10^{-12}$, and a value "(hydraulic diameter of cells)$^2$ / (permeability)" of $1.61 \times 10^5$. The pressure loss evaluation result was "Good", the PM collection efficiency evaluation result was "Good", the partition wall strength evaluation result was "Good", the partition wall clogging evaluation result was "Good", and the exhaust gas purification performance evaluation result was also "Good".

Examples 19 to 21 and 23 to 33 and Comparative Examples 9 to 16

Honeycomb structures of Examples 19 to 33 and Comparative Examples 9 to 16 were obtained in the same manner as in Example 18, except that the conditions were changed as shown in Table 4. The honeycomb structures were evaluated (measured) in the same manner as described above. A catalyst was supported on each honeycomb structure in the same manner as in Example 18 to obtain a honeycomb catalyst body. The resulting honeycomb catalyst body was evaluated in the same manner as described above. The measurement results are shown in Table 5, and the evaluation results are shown in Table 6.

TABLE 4

| | Main raw material | | | | | | Pore-forming material | |
|---|---|---|---|---|---|---|---|---|
| | Talc mass% (average particle size) | Kaolin mass% (average particle size) | Quartz mass% (average particle size) | Fused silica mass% (average particle size) | Aluminum oxide mass% (average particle size) | Aluminum hydroxide mass% (average | Iron powder mass%(average particle size) | Graphite mass% (average particle size) |
| Example 18 | 39.7 (22 μm) | 51.2 (7 μm) | 0 | 0 | 5.5 (6 μm) | 12.7 (1 μm) | 0 | 0 |
| Example 19 | 39.7 (22 μm) | 51.2 (7 μm) | 0 | 0 | 5.5 (6 μm) | 12.7 (1 μm) | 0 | 0 |
| Example 20 | 39.7 (22 μm) | 51.2 (7 μm) | 0 | 0 | 5.5 (6 μm) | 12.7 (1 μm) | 0 | 0 |
| Example 21 | 39.7 (22 μm) | 51.2 (7 μm) | 0 | 0 | 5.5 (6 μm) | 12.7 (1 μm) | 0 | 0 |
| Example 22 | 40 (32 μm) | 19 (35 μm) | 12 (116 μm) | - | 14 6 μm) | 15 (3 μm) | 20 (30 μm) | 0 |
| Example 23 | 39.7 (22 μm) | 51.2 (7 μm) | 0 | 0 | 5.5 (6 μm) | 12.7 (1 μm) | 0 | 0 |
| Example 24 | 39.7 (22 μm) | 51.2 (7 μm) | 0 | 0 | 5.5 (6 μm) | 12.7 (1 μm) | 0 | 0 |
| Example 25 | 39.7 (22 μm) | 51.2 (7 μm) | 0 | 0 | 5.5 (6 μm) | 12.7 (1 μm) | 0 | 0 |
| Example 26 | 39.4 (22 μm) | 21.5 (7 μm) | 0 | 10 (30 μm) | 8.7 (6 μm) | 20.3 (1 μm) | 0 | 0 |
| Example 27 | 39.7 (22 μm) | 51.2 (7 μm) | 0 | - | 18.2 (6 μm) | 0 | 0 | 0 |
| Example 28 | 39.7 (22 μm) | 51.2 (7 μm) | 0 | 0 | 18.2 (6 μm) | 0 | 0 | 0 |
| Example 29 | 39.7 (22 μm) | 51.2 (7 μm) | 0 | 0 | 18.2 (6 μm) | 0 | 0 | 0 |
| Example 30 | 39.7 (22 μm) | 51.2 7 μm) | 0 | 0 | 18.2 (6 μm) | 0 | 0 | 0 |
| Example 31 | 39.7 (22 μm) | 51.2 (7 μm) | 0 | 0 | 18.2 (6 μm) | 0 | 0 | 0 |
| Example 32 | 39.4 (22 μm) | 21.5 (7 μm) | 0 | 10 (30 μm) | 29.0 (6 μm) | 0 | 0 | 0 |
| Example 33 | 39.6 (32 μm) | 31.8 (7 μm) | 0 | 5 (30 μm) | 7.1 (6 μm) | 16.5 (1 μm) | 0 | 0 |
| Comparative Example 9 | 39.7 (22 μm) | 51.2 (7 μm) | 0 | 0 | 18.2 (6 μm) | 0 | 0 | 0 |
| Comparative Example 10 | 39.7 (50 μm) | 51.2 (7 μm) | 0 | 0 | 18.2 (6 μm) | 0 | 0 | 10 (50 μm) |
| Comparative Example 11 | 40 (35 μm) | 19 (7 μm) | 12 (116 μm) | - | 14 (6 μm) | 15 (3 μm) | 0 | 0 |

EP 2 236 189 B1

(continued)

| | Main raw material | | | | | | Pore-forming material | |
|---|---|---|---|---|---|---|---|---|
| | Talc mass% (average particle size) | Kaolin mass% (average particle size) | Quartz mass% (average particle size) | Fused silica mass% (average particle size) | Aluminum oxide mass% (average particle size) | Aluminum hydroxide mass% (average | Iron powder mass%(average particle size) | Graphite mass% (average particle size) |
| Comparative Example 12 | 39.7 (50 μm) | 51.2 (7 μm) | 0 | 0 | 18.2 (6 μm) | 0 | 0 | 10 (50 μm) |
| Comparative Example 13 | 40 (20 μm) | 19 (7 μm) | 12 (116 μm) | - | 14 (6 μm) | 15 (3 μm) | 0 | 0 |
| Comparative Example 14 | 39.4 (22 μm) | 21.5 (7 μm) | 0 | 10 (30 μm) | 29.1 (6 μm) | 0 | 0 | 0 |
| Comparative Example 15 | 39.4 (22 μm) | 21.5 (7 μm) | 0 | 10 (30 μm) | 29.1 (6 μm) | 0 | 0 | 0 |
| Comparative Example 16 | 39.4 (22 μm) | 21.5 (7 μm) | 0 | 10 (30 μm) | 29.1 (6 μm) | 0 | 0 | 0 |

TABLE 5

| | Rib thickness | | Cell density | | Cell hydraulic diameter(d) (m) | Open frontal area (OFA) (%) | Pore size Porosity ($\mu$m) | (%) | Partition wall permeability (m$^2$) | $d^2$/P |
|---|---|---|---|---|---|---|---|---|---|---|
| | (mil) | (mm) | (cpsi) | (/cm$^2$) | | | | | | |
| Example 18 | 3.2 | 8.1 | 280 | 43.4 | 0.00144 | 89.6 | 12 | 26 | $1.28 \times 10^{-1}$ | $1.61 \times 10^6$ |
| Example 19 | 3.5 | 8.9 | 250 | 38.8 | 0.00152 | 89.2 | 12 | 26 | $1.28 \times 10^{-12}$ | $1.80 \times 10^6$ |
| Example 20 | 4.5 | 11.4 | 180 | 27.9 | 0.00178 | 88.3 | 12 | 26 | $1.28 \times 10^{-12}$ | $2.47 \times 10^6$ |
| Example 21 | 4.5 | 11.4 | 200 | 31.0 | 0.00168 | 87.7 | 12 | 27 | $1.33 \times 10^{-12}$ | $2.13 \times 10^6$ |
| Example 22 | 4.5 | 11.4 | 200 | 31.0 | 0.00168 | 87.7 | 19 | 13 | $1.60 \times 10^{-12}$ | $1.76 \times 10^6$ |
| Example 23 | 4.5 | 11.4 | 200 | 31.0 | 0.00168 | 87.7 | 12 | 28 | $1.38 \times 10^{-12}$ | $2.05 \times 10^6$ |
| Example 24 | 4.5 | 11.4 | 200 | 31.0 | 0.00168 | 87.7 | 10 | 31 | $1.06 \times 10^{-12}$ | $2.67 \times 10^6$ |
| Example 25 | 4.5 | 11.4 | 200 | 31.0 | 0.00168 | 87.7 | 10 | 25 | $8.55 \times 10^{-13}$ | $3.31 \times 10^6$ |
| Example 26 | 4.5 | 11.4 | 200 | 31.0 | 0.00168 | 87.7 | 9.5 | 32 | $9.87 \times 10^{-13}$ | $2.87 \times 10^6$ |
| Example 27 | 6.7 | 17.0 | 100 | 15.5 | 0.00237 | 87.0 | 13 | 26 | $1.50 \times 10^{-12}$ | $3.74 \times 10^6$ |
| Example 28 | 7.9 | 20.3 | 80 | 12.4 | 0.00264 | 86.2 | 13 | 26 | $1.50 \times 10^{-12}$ | $4.63 \times 10^6$ |
| Example 29 | 6.7 | 17.0 | 100 | 15.5 | 0.00237 | 87.0 | 13 | 26 | $1.50 \times 10^{-12}$ | $3.74 \times 10^6$ |
| Example 30 | 6 | 15.2 | 100 | 15.5 | 0.00239 | 88.4 | 13 | 26 | $1.50 \times 10^{-12}$ | $3.80 \times 10^6$ |
| Example 31 | 5.2 | 13.2 | 100 | 15.5 | 0.00241 | 89.9 | 13 | 26 | $1.50 \times 10^{-12}$ | $3.86 \times 10^6$ |
| Example 32 | 5 | 12.7 | 150 | 23.3 | 0.00195 | 88.1 | 14 | 26 | $1.74 \times 10^{-12}$ | $2.17 \times 10^6$ |
| Example 33 | 6.5 | 16.5 | 170 | 26.4 | 0.00178 | 83.8 | 15 | 26 | $2 \times 10^{-12}$ | $1.59 \times 10^6$ |
| Comparative Example 9 | 1.5 | 3.8 | 180 | 27.9 | 0.00186 | 96.0 | 7 | 26 | $4.36 \times 10^{.13}$ | $7.90 \times 10^6$ |
| Comparative Example 10 | 12 | 30.5 | 300 | 46.5 | 0.00116 | 62.8 | 38 | 38 | $1.88 \times 10^{-11}$ | $7.19 \times 10^4$ |
| Comparative Example 11 | 12 | 30.5 | 300 | 46.5 | 0.00116 | 62.8 | 38 | 13 | $6.42 \times 10^{-12}$ | $2.10 \times 10^5$ |
| Comparative Example 12 | 12 | 30.5 | 70 | 10.9 | 0.00273 | 80.9 | 7 | 38 | $6.37 \times 10^{-13}$ | $1.7 \times 10^7$ |

(continued)

| | Rib thickness | | Cell density | | Cell hydraulic diameter(d) (m) | Open frontal area (OFA) (%) | Pore size Porosity ($\mu$m) | (%) | Partition wall permeability ($m^2$) | $d^2/P$ |
|---|---|---|---|---|---|---|---|---|---|---|
| | (mil) | (mm) | (cpsi) | (/cm$^2$) | | | | | | |
| Comparative Example 13 | 17 | 43.2 | 70 | 10.9 | 0.00260 | 73.6 | 5 | 7 | $5.98\times10^{-14}$ | $1.13\times10^{7}$ |
| Comparative Example 14 | 7.2 | 18.3 | 300 | 46.5 | 0.00128 | 76.6 | 6 | 25 | $3.08\times10^{13}$ | $5.36\times10^{6}$ |
| Comparative Example 15 | 8 | 20.3 | 300 | 46.5 | 0.00126 | 74.2 | 5 | 30 | $2.56\times10^{-13}$ | $6.22\times10^{6}$ |
| Comparative Example 16 | 9 | 22.9 | 300 | 46.5 | 0.00124 | 71.3 | 5 | 30 | $2.56\times10^{-13}$ | $5.98\times10^{6}$ |

TABLE 6

|  | Pressure loss | PM collection efficiency | Hydrostatic strength | Clogging of partition wall due to soot | Exhaust gas purification performance |
|---|---|---|---|---|---|
| Example 18 | Good | Good | Good | Good | Good |
| Example 19 | Good | Good | Good | Good | Good |
| Example 20 | Good | Good | Good | Good | Good |
| Example 21 | Good | Good | Good | Good | Good |
| Example 22 | Good | Good | Good | Good | Good |
| Example 23 | Good | Good | Good | Good | Good |
| Example 24 | Good | Good | Good | Good | Good |
| Example 25 | Good | Good | Good | Good | Good |
| Example 26 | Good | Good | Good | Good | Good |
| Example 27 | Good | Good | Good | Good | Good |
| Example 28 | Good | Good | Good | Good | Good |
| Example 29 | Good | Good | Good | Good | Good |
| Example 30 | Good | Good | Good | Good | Good |
| Example 31 | Good | Good | Good | Good | Good |
| Example 32 | Good | Good | Good | Good | Good |
| Example 33 | Good | Good | Good | Good | Good |
| Comparative Example 9 | Bad | Bad | Bad | Bad | Bad |
| Comparative Example 10 | Bad | Bad | Good | Bad | Bad |
| Comparative Example 11 | Bad | Bad | Good | Bad | Bad |
| Comparative Example 12 | Bad | Good | Good | Bad | Bad |
| Comparative Example 13 | Bad | Good | Good | Bad | Bad |
| Comparative Example 14 | Bad | Good | Good | Bad | Bad |
| Comparative Example 15 | Bad | Good | Good | Bad | Bad |
| Comparative Example 16 | Bad | Good | Good | Bad | Bad |

Example 22

A honeycomb structure was obtained in the same manner as in Example 5, except that the conditions were changed as shown in Table 4. A catalyst slurry containing an oxidizing catalyst (platinum and alumina) was applied to and supported on the surface and the pore inner surface of the partition wall of the honeycomb structure by a suction method so that the density was 15 g/L. The honeycomb structure was then dried by heating to form a catalyst coating layer on the surface of the partition wall and the pore inner surface of the honeycomb structure to obtain a honeycomb catalyst body. The resulting honeycomb catalyst body was evaluated in the same manner as described above. The measurement results are shown in Table 5, and the evaluation results are shown in Table 6.

As shown in Tables 3 and 6, the honeycomb catalyst bodies of Examples 1 to 33 exhibited a sufficient partition wall strength, a low pressure loss, rarely showed clogging due to soot, and exhibited a sufficiently high PM collection efficiency and a high exhaust gas purification efficiency as compared with the honeycomb structures of Comparative Examples 1 to 16.

The honeycomb structure according to the present invention may be suitably utilized as a filter that removes particulate matter contained in exhaust gas discharged from an internal combustion engine (e.g., automobile engine, construction machine engine, or stationary industrial engine), a combustion apparatus, and the like.

## Claims

1. A honeycomb structure comprising:

   a porous partition wall that has a number of pores and is disposed to form a plurality of cells that extend between two end faces of the honeycomb structure; and
   a plurality of plugging sections that are disposed to plug the plurality of cells on either of the end faces or inside the plurality of cells,
   the partition wall having a thickness of 76.2 to 177.8 $\mu$m, an average pore size of 8 to 30 $\mu$m, and a porosity of 10 to 35%, and the honeycomb structure having a cell density of 12.4 to 45.0 cells/cm$^2$;
   and wherein the ratio of the total open area of the plurality of cells to the sum of the cross-sectional area of the partition wall and the total open area of the plurality of cells in a cross section perpendicular to a cell extension direction is 83 to 90%.

2. The honeycomb structure according to claim 1, wherein the partition wall has a permeability of $1 \times 10^{-12}$ to $6 \times 10^{-12}$ m$^2$.

3. The honeycomb structure according to claim 1 or claim 2, wherein the hydraulic diameter (m) of the cells and the permeability (m$^2$) of the partition wall satisfy the relationship "(hydraulic diameter of cells)$^2$ / (permeability) = $1.0 \times 10^5$ to $4.5 \times 10^6$".

4. The honeycomb structure according to any one of claims 1 to 3, the honeycomb structure being formed of a material that contains at least one ceramic selected from the group consisting of cordierite, aluminum titanate, silicon carbide, sialon, mullite, silicon nitride, zirconium phosphate, zirconia, titania, alumina, and silica.

5. The honeycomb structure according to any one of claims 1 to 4, the honeycomb structure having a thermal expansion coefficient of $1.0 \times 10^{-6}$/°C or less measured at 40 to 800°C in the cell extension direction.

## Patentansprüche

1. Wabenstruktur, die Folgendes umfasst:

   eine poröse Trennwand, die eine Reihe von Poren aufweist und angeordnet ist, um eine Vielzahl an Zellen zu bilden, die sich zwischen zwei Endflächen der Wabenstruktur erstrecken; und
   eine Vielzahl an Verschlussabschnitten, die angeordnet sind, um die Vielzahl an Zellen an einer der beiden Endflächen oder im Inneren der Vielzahl an Zellen zu verschließen,
   wobei die Trennwand eine Dicke von 76,2 bis 177,8 $\mu$m, eine mittlere Porengröße von 8 bis 30 $\mu$m und eine Porosität von 10 bis 35 % aufweist und die Wabenstruktur eine Zelldichte von 12,4 bis 45,0 Zellen/cm$^2$ aufweist, und worin der Anteil der Gesamtöffnungsfläche der Vielzahl an Zellen an der Summe der Querschnittsfläche der Trennwand und der Gesamtöffnungsfläche der Vielzahl an Zellen in einem Querschnitt im rechten Winkel auf die Zellerstreckungsrichtung 83 bis 90 % beträgt.

2. Wabenstruktur nach Anspruch 1, worin die Trennwand eine Permeabilität von $1 \times 10^{-12}$ bis $6 \times 10^{-12}$ m$^2$ aufweist.

3. Wabenstruktur nach Anspruch 1 oder 2, worin für den hydraulischen Durchmesser (m) der Zellen und die Permeabilität (m$^2$) der Trennwand folgendes Verhältnis gilt: (hydraulischer Durchmesser der Zellen)$^2$/(Permeabilität) = $1,0 \times 10^5$ bis $4,5 \times 10^6$.

**4.** Wabenstruktur nach einem der Ansprüche 1 bis 3, wobei die Wabenstruktur aus einem Material ausgebildet ist, das zumindest ein aus folgender Gruppe ausgewähltes Keramikmaterial enthält: Cordierit, Aluminiumtitanat, Siliciumcarbid, Sialon, Mullit, Siliciumnitrid, Zirconiumphosphat, Zirconiumdioxid, Titanoxid, Aluminiumoxid und Siliciumdioxid.

**5.** Wabenstruktur nach einem der Ansprüche 1 bis 4, wobei die Wabenstruktur bei 40 bis 800 °C in Zellerstreckungsrichtung einen Wärmeausdehnungskoeffizienten von $1{,}0\times10^{-6}/°C$ oder weniger aufweist.

**Revendications**

**1.** Structure en nid d'abeilles comprenant :

une paroi de séparation poreuse qui a un certain nombre de pores et est disposée de manière à former une pluralité d'alvéoles qui s'étendent entre deux faces d'extrémité de la structure en nid d'abeilles ; et
une pluralité de sections d'obturation qui sont disposées de manière à obturer la pluralité d'alvéoles sur l'une ou l'autre des faces d'extrémité ou à l'intérieur de la pluralité d'alvéoles,
la paroi de séparation ayant une épaisseur de 76,2 à 177,8 $\mu$m, une taille de pores moyenne de 8 à 30 $\mu$m, et une porosité de 10 à 35 %, et la structure en nid d'abeilles ayant une densité d'alvéoles de 12,4 à 45,0 alvéoles/cm$^2$ ;
et dans laquelle le rapport de la superficie ouverte totale de la pluralité d'alvéoles à la somme de la superficie en coupe transversale de la paroi de séparation et de la superficie ouverte totale de la pluralité d'alvéoles dans une section transversale perpendiculaire à la direction d'extension des alvéoles est de 83 à 90 %.

**2.** Structure en nid d'abeilles selon la revendication 1, dans laquelle la paroi de séparation a une perméabilité de $1 \times 10^{-12}$ à $6 \times 10^{-12}$ m$^2$.

**3.** Structure en nid d'abeilles selon la revendication 1 ou la revendication 2, dans laquelle le diamètre hydraulique (m) des alvéoles et la perméabilité (m$^2$) de la paroi de séparation satisfont à la relation (diamètre hydraulique des alvéoles)$^2$ / (perméabilité) = $1{,}0 \times 10^5$ à $4{,}5 \times 10^6$.

**4.** Structure en nid d'abeilles selon l'une quelconque des revendications 1 à 3, la structure en nid d'abeilles étant formée en un matériau qui contient au moins une céramique choisie dans le groupe constitué par la cordiérite, le titanate d'aluminium, le carbure de silicium, le sialon, la mullite, le nitrure de silicium, le phosphate de zirconium, la zircone, l'oxyde de titane, l'alumine, et la silice.

**5.** Structure en nid d'abeilles selon l'une quelconque des revendications 1 à 4, la structure en nid d'abeilles ayant un coefficient de dilatation thermique de $1{,}0 \times 10^{-6}/°C$ ou moins, mesuré à une température de 40 à 800°C dans la direction d'extension des alvéoles.

FIG.1

FIG.2

FIG.3

FIG.4

FIG.5

FIG.6

FIG.7

CUT

**EP 2 236 189 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003033664 A
- JP 2001269585 A
- EP 1707251 A
- US 2008110143 A